# EUROPEAN PATENT APPLICATION

(11) **EP 4 745 525 A1**
(43) Date of publication of application: **20.05.2026**
(21) Application number: 25214915.8
(22) Date of filing: 11.11.2025
(51) Int. Cl.: G01C 21/30, G08G 1/00, H04W 4/029

(54) **DETECTION OF LINKAGES BETWEEN VEHICLES**

(30) Priority: 14.11.2024 US 202463720517 P; 13.10.2025 US 202519356409
(71) Applicant: The Goodyear Tire & Rubber Company, Akron, OH 44316 (US)
(72) Inventor: SAJADI ALAMDARI, Seyed Amin, 7750 Colmar-Berg (LU); SHARMA, Sparsh, 1610 Luxembourg (LU); DERLUYN, Pieter-Jan, 8285 Kehlen (LU)
(74) Representative: Kutsch, Bernd

(57) **Abstract**

A method for detecting a linkage between vehicles is disclosed. The method comprises the steps of: monitoring a location of a first vehicle so as to obtain a first vehicle trace; optionally matching the first vehicle trace to a map route to obtain a first vehicle map route; monitoring a location of a second vehicle so as to obtain a second vehicle trace; optionally matching the second vehicle trace to a map route to obtain a second vehicle map route; and comparing the first vehicle trace or map route with the second vehicle trace or map route for a common time period, including determining a degree of conformity between the first vehicle map route and the second vehicle map route for the common time period. Also, a method of monitoring tractor-trailer linkages in a vehicle fleet (100) is disclosed.

## Description

### BACKGROUND OF THE INVENTION

Over the past decades the transportation of goods with vehicles has considerably increased. In many cases, transportation companies manage vehicle fleets comprising hundreds or even thousands of trucks and trailers. In order to provide efficient transportation services, it is desirable to have an advanced overview of the status of a vehicle fleet. While various systems for monitoring vehicle fleets have been provided, significant room for improvement remains.

### SUMMARY OF THE INVENTION

The invention relates to a method in accordance with claims 1 or 12, respectively.

Dependent claims refer to preferred embodiments of the invention.

In a first preferred aspect of the present invention, the invention is directed to a method for detecting a linkage between vehicles, comprising steps of monitoring a location of a first vehicle so as to obtain a first vehicle trace, matching the first vehicle trace to a map route to obtain a first vehicle map route, monitoring a location of a second vehicle so as to obtain a second vehicle trace, and matching the second vehicle trace to a map route to obtain a second vehicle map route. Furthermore, the method comprises comparing the first vehicle map route with the second vehicle map route for a common time period, including determining a degree of conformity between the first vehicle map route and the second vehicle map route for the common time period.

In a second preferred aspect of the present invention, the invention is directed to a method for detecting a linkage between vehicles, comprising steps of monitoring a location of a first vehicle with a global navigation satellite system so as to obtain a first vehicle trace based on positioning data obtained via the global navigation satellite system, monitoring a location of a second vehicle with a global navigation satellite system so as to obtain a second vehicle trace based on global positioning data obtained via the global navigation satellite system, comparing the first vehicle trace with the second vehicle trace for a common time period, and determining a degree of conformity between the first vehicle trace and the second vehicle trace for the common time period.

In a third preferred aspect of the present invention, the invention is directed to a method of monitoring tractor-trailer linkages in a vehicle fleet comprising tractors and trailers, wherein the method comprises a step of providing a vehicle fleet comprising tractors and trailers, wherein each tractor of the tractors comprises a telematics system for uniquely identifying the tractor and determining a location of the tractor, and wherein each trailer of the trailers comprises a telematics system for uniquely identifying the trailer and determining a location of the trailer. Furthermore, the method comprises the steps of monitoring the locations of at least a plurality of the tractors via respective telematics systems so as to obtain a plurality of tractor traces, and monitoring the locations of at least a plurality of the trailers via respective telematics systems so as to obtain a plurality of trailer traces. Further steps, still according to the third aspect, comprise matching tractor traces of the plurality of tractor traces and trailer traces of the plurality of trailer traces to map routes so as to obtain matched tractor map routes and matched trailer map routes, and comparing the matched tractor map routes with the matched trailer map routes for a common time period, including determining a degree of conformity between the matched tractor map routes and the matched trailer map routes for the common time period so as to obtain one or more conforming pairs of matched tractor map routes and matched trailer map routes, indicative of one or more tractor-trailer linkages.

The method of the third preferred aspect of the present invention preferably further comprises the step of: forming sets of traces comprising tractor traces and trailer traces which are within a defined maximum spatial distance and within a defined maximum time difference. Preferably, the step of matching tractor traces of the plurality of tractor traces and trailer traces of the plurality of trailer traces to map routes comprises matching each tractor trace and each trailer trace of each set of traces of the sets of traces to a map route so as to obtain for each set of traces a set of map routes comprising the matched tractor map routes and the matched trailer map routes.

In the above specified preferred aspects of the invention, the vehicle fleet is preferably one or more of: a vehicle fleet comprising from 50 to 10000 tractors and from 50 to 10000 trailers; and a truck fleet comprising at least predominantly tractors including one or more of a) at least six 22.5 inch (1 inch = 2.54 cm) wheels and trailers including at least four 22.5 inch wheels.

### BRIEF DESCRIPTION OF DRAWINGS

The invention will be described by way of example and with reference to the accompanying drawings in which:
FIG. 1 is a schematic flowchart showing steps of a method for detecting linkages between vehicles of a vehicle fleet according to an embodiment of the present invention;
FIG. 2 is a schematic flowchart showing steps of another method for detecting linkages between tractors and trailers of a vehicle fleet, according to another embodiment of the present invention;
FIG. 3 is a schematic flowchart showing steps of yet another method for detecting linkages between tractors and trailers of a vehicle fleet, according to yet another embodiment of the present invention;
FIG. 4 is a scheme schematically showing communication between a truck fleet, a global navigation satellite system, a remote server, and fleet management, in accordance with still another embodiment of the present invention;
FIG. 5a is a schematic view of GPS vehicle traces of two vehicles 1 and 2;
FIG. 5b is a schematic view of the vehicle traces shown already in Figure 5a and of a geofence for the vehicle trace of vehicle 1;
FIG. 5c is a schematic view of the GPS trace of vehicle 1 as shown in Figures 5a and 5b, including a map matched road corresponding to the GPS trace of vehicle 1;
FIG. 5d is a schematic view of the GPS trace of vehicle 2 as shown in Figures 5a and 5b, including a map matched road corresponding to the GPS trace of vehicle 2; and
FIG. 5e is a schematic view of both map matched roads of vehicle 1 and vehicle 2.

### DETAILED DESCRIPTION OF PREFERRED EMBODIMENTS OF THE INVENTION

According to a first aspect, the invention is directed to the method for detecting a linkage between vehicles (such as between tractors and trailers, and/or trailers and trailers) comprising steps of monitoring a location of a first vehicle (such as a tractor or first trailer) so as to obtain a first vehicle trace, matching the first vehicle trace to a map route to obtain a first vehicle map route, monitoring a location of a second vehicle (such as a trailer or second trailer, respectively) so as to obtain a second vehicle trace. Further steps comprise matching the second vehicle trace to a map route to obtain a second vehicle map route, and comparing the first vehicle map route with the second vehicle map route for a common time period, wherein said comparing includes determining a degree of conformity between the first vehicle map route and the second vehicle map route for the common time period.

Thus, the method for detecting the linkage between vehicles (such as a hitching of one vehicle to another vehicle, or in other words, a mechanical linkage between the vehicles) involves monitoring the vehicles and matching monitored traces (or, in other words, spatial traces) to map routes. Then, said map routes are compared with one another for a common time period including a determination of the degree of conformity of the map routes, which allows to conclude whether the vehicles are linked (or hitched) to each other or not. In particular, such method steps may be carried out by one or more processing units, such as by a computer and/or server, which may map-match vehicle traces to an available map, particularly a road map, e.g., based on telematics data and/or positioning data (such as global positioning data, for example, of a global position system), and which may carry out said step of comparing including the determination of the degree of conformity of the matched map routes. The degree of conformity can be considered as a measure of conformity or a measure of similarity between two map routes. A linkage between two vehicles may be automatically determined, particularly without requiring calls between vehicle drivers and fleet operators or managers. Continuous bookkeeping of vehicles linked to each other, or information about which driver is reachable by phone in which truck, is not necessary anymore to obtain an overview of vehicles linked to each other. In particular, the method offers a considerable advantage for the management of large truck and trailer fleets. Maintenance and repair of vehicles, and/or the handling of incidents, can be handled efficiently.

In one embodiment, the step of comparing the first vehicle map route with the second vehicle map route comprises one or more of: comparing map route segments (such as road segments) of the first vehicle map route with map route segments (such as road segments) of the second vehicle map route; comparing shared route lengths (such as road kilometers) of the first vehicle map route and the second vehicle map route; comparing a visual representation of the first vehicle map route with a visual representation of the second vehicle map route; and comparing a fitting function of the first vehicle map route with a fitting function of the second vehicle map route. The terms first vehicle map route and second vehicle map route can also be mentioned herein as map route of the first vehicle and map route of the second vehicle, respectively. A route segment, or road segment, can for instance be provided by including one or more of start point coordinates, end point coordinates, segment length, and angular orientation. In addition, or alternatively, a route segment may be provided as a visual representation of a part of a route. How a route or road segment is provided may, e.g., be chosen based on the utilized map matching. A visual representation of a map route may be one or more of a curve and a line, such as shown on a map. A fitting function, or fit function of a map route, may be provided as a mathematical function and/or a graphical fitting curve. The terms map matching, such as a map matching trace, to a route or map route, and matching a trace to a map route, or equivalent, are used interchangeably herein.

In another embodiment, the method further comprises the step of determining a linkage between the first vehicle and the second vehicle if the degree of conformity between the first vehicle map route and the second vehicle map route exceeds a defined threshold value. Said degree of conformity and/or the defined threshold value may be implemented or provided in various ways.

In one embodiment, a map route may comprise or consist of multiple map route segments, such as known in the state of the art of map matching, so that multiple route or road segments, may be compared with one another and a degree of conformity can be determined based on comparing these road segments (such as carried out by a processing unit). For instance, a first map route comprises multiple route segments, and a second map route comprises multiple route segments (for the common time period). Then, said route segments of the first map route are compared with the route segments of the second map route, particularly with respect to how many of the route segments of both map routes are identical. If all route segments of both map routes are identical, the degree of conformity can be considered as being 100%. In practice, even for two actually linked vehicles, it may happen that a majority of route segments of both map routes are identical but some are not (e.g., one route segment of the first map route and another route segment of the second map route are not identical / different). In a preferred option, the degree of conformity can be based on or consist of a ratio of the number of identical route segments and a total number of route segments of the map routes. For example, if 9 out of 10 route segments are identical, the degree of conformity may be provided as 9/10 = 0.9, resulting in a degree of conformity of 90%. In other words, the degree of conformity can also be described as a probability of conformity. For example, if all route segments of both map routes are identical (for the common time period), a probability of conformity may be provided as 100%. If 9 out of 10 road segments are identical (as in the above non-limiting example), a probability of conformity of both map routes may be provided as 90%. For instance, in the present example, a threshold value may also be provided as a percentage, such as a threshold value of 80%. Thus, for a degree or probability of conformity of 100%, the threshold value is exceeded and a linkage between both vehicles is determined. Also, for said case of a degree or probability of conformity of 90%, the threshold is exceeded and linkage between both vehicles is determined. A threshold value can for instance be chosen based on desired accuracy, available accuracy or sampling of traces, and/or map matching accuracy. However, such a comparison of route segments, and/or determination of a degree of conformity of route segments is only one embodiment.

In another embodiment, shared route lengths (such as determined in one of miles and kilometers) of map routes can be compared. A degree of conformity, can, e.g., be provided as a ratio of shared lengths of both map routes and the total length of one of the map routes. For instance, if a first map route shares the length of a second map route over 85 km, wherein the second map route is 100 km long, a ratio of the shared length of the first map route and length of the second map route can be provided as 85/100 = 0.85, corresponding to a degree of conformity of 85%, which can also be considered as a probability of conformity of 85%. A threshold value may be provided in a similar manner as mentioned herein above in relation to the comparison of numbers of road segments.

In yet another embodiment, map routes can be represented by mathematical functions, such as one or more of linear functions, polynomial functions (such as of second or higher degrees), and splines, e.g., providing an interpolation of the vehicle traces, and wherein the resulting functions are preferably compared by a processing unit. For instance, comparing such functions could be based on one or more of cross-correlation and a determination of sum square differences, or other suitable methods known in the art. Determining a degree of conformity of two map routes based on mathematical functions may thus, e.g., involve determining a correlation of both functions representing, such as interpolating, the map routes.

**In** still another option, the map routes may be graphically visualized map routes, such as vehicle trajectories corresponding to roads on a map. Then, a comparison of the map routes can, e.g., comprise or consist of a comparison of graphical representations of the map routes. **In** order to determine a degree of conformity, the graphical representations of the map routes may be compared based on one or more of histogram-based methods, structural similarity index based methods, feature-based methods, and other suitable methods known in the art for graphical comparisons.

**In** another option, graphical representations of matched map routes, may be fitted with mathematical functions and graphical representations of the fitting curves may be compared with each other. Again, it is also possible to compare the fitting curves or functions without visualization of the fitting curves or functions by a processing unit, e.g., as mentioned above. **In** either way, it is possible to define a threshold value serving as a criterion to decide on whether a linkage of vehicles is present or not.

**In** another example, the comparison can be based on the likelihood function, which is as such known in statistics, and which can also provide a probability of conformity between two map routes.

**In** still another embodiment, the degree of conformity is a probability of conformity (e.g., in percent), and/or the threshold value is a probability threshold value (e.g., in percent).

**In** still another embodiment, at least one of monitoring the location of the first vehicle and monitoring the location of the second vehicle comprises monitoring the location with a global navigation satellite system, such as one or more of the Global Positioning System (GPS) from the USA, Galileo from the European Union, BeiDou from China, and the Global Navigation Satellite System (GLONASS) from Russia. Preferably, such a location (such as a GPS location) is monitored and/or determined with intervals of 1 minute to 30 minutes, or more preferably, of 5 minutes to 20 minutes. A continuous determination of location is also possible but involves larger amounts of data. In view of the present method, including matching traces to map routes, it is possible to use relatively low sampling rates, or in other words, long time intervals of monitoring/determining the location. This can help to significantly reduce data transfer volumes and thus costs. Optionally, a vehicle trace is formed by a number of locations, or in other words positions (such as GPS positions). **In** another option said locations and/or positions, such as consecutive locations and/or positions, of a vehicle trace, are connected by lines, such as straight lines.

**In** still another embodiment, at least one of monitoring the location of the first vehicle and monitoring the location of the second vehicle is carried out over a monitoring period, which is at least 30 minutes, preferably at least 40 minutes, or even more preferably at least 60 minutes. Such a relatively long monitoring period may help to further increase the accuracy of the linkage detection, e.g., particularly if combined with the above-mentioned intervals of location determination.

In still another embodiment, at least one of matching the first vehicle trace to a map route and/or matching the second vehicle trace to a map route includes using one or more of: a map matching algorithm, and a road map. A variety of map matching algorithms as such is known in the art, e.g., based on but not limited to topological methods or Hidden Markov Models. It is emphasized that multiple further map matching algorithms and/or methods are known to the person skilled in the art and could be used in this method. Map matching as such is also offered as a commercial service, such as through the service Snap to Roads by the company Google, USA. In particular, map matching steps of the present invention are not necessarily limited to a specific map matching algorithm.

In still another embodiment, said common time period is at least 30 minutes, preferably at least 40 minutes, or even more preferably at least 60 minutes. Optionally, the common time period may correspond to and/or be comprised in the above monitoring period of monitoring the location of the first vehicle and monitoring the location of the second vehicle.

In still another embodiment, the method further comprises a step of checking if at least one of i) the first vehicle trace and the second vehicle trace, and ii) the location of the first vehicle and the location of the second vehicle are within a defined maximum spatial distance.

In one option, it is possible to allocate a spatial interval, sometimes also referred to as a geofence or geofence area, around one or more vehicle traces (such as each vehicle trace) and to check if such geofence areas at least partially overlap. For example, if the intervals at least partially overlap, the corresponding vehicle traces are (and/or were monitored) within the defined maximum spatial distance. Alternatively, it is possible to allocate a geofence area around a first vehicle trace and check if one or more of locations/positions and a second vehicle trace are at least partially within the geofence area of the first vehicle trace. If said one or more of locations/positions and the second vehicle trace are at least partially in the geofence of the first vehicle trace, the first and the second vehicle traces are considered to be within the defined maximum spatial distance.

In still another embodiment, the maximum spatial distance can be defined by the requirement that the location of the first vehicle and the location of the second vehicle are within the same country.

In another option, two vehicles can be found to be within a defined maximum spatial distance if at least one location/position of the first vehicle trace and one location/position of the second vehicle trace are within the defined maximum spatial distance. The terms location and position are used interchangeably in the present application, unless indicated otherwise herein.

In case of checking if locations of the first vehicle and the second vehicle are within the defined maximum spatial distance, this distance may be determined as a length of a straight line between these two locations.

Preferably, said maximum spatial distance is at most 30 km, or even more preferably at most 25 km, or 5 km, or 1 km, or 0.5 km, or 0.1 km. For instance, such a distance may preferably also be chosen in view of a rate of monitoring/determining the location of the vehicles.

In still another option, if the at least one of i) the first vehicle trace and the second vehicle trace, and/or ii) the location of the first vehicle and the location of the second vehicle, are within the defined maximum spatial distance, it is checked if the at least one of (or, in other words, respective one of) i) the first vehicle trace and the second vehicle trace, and/or ii) the location of the first vehicle and the location of the second vehicle, which are within the defined maximum spatial distance, are within a defined maximum time difference.

In an option, said defined maximum time difference, is at most 80 minutes, preferably at most, or even less than, 60 minutes.

In still another embodiment, each of the first vehicle and the second vehicle comprises a telematics system. A telematics system could be an onboard telematics system, such as sold as original equipment with the vehicle. For instance, modern passenger cars and/or trucks, or in other words, tractors have such onboard telematics systems. Sometimes such systems are also called embedded telematics, or embedded telematics systems. Typically, a telematics system can include an onboard global position system. In other words, a telematics system can be typically adapted to monitor and/or determine the location of a vehicle by means of a global navigation satellite system, such as GPS. A reference to a telematics system shall also comprise herein a so-called telematics control unit (TCU). Such units are often retrofit to vehicles which have not been originally equipped with a telematics system. Typically, TCUs can be retrofitted to trailers (which are also considered as vehicles herein). Thus, according to the present embodiment, each vehicle is provided with a telematics system. Such a telematics system can be configured and/or adapted to send and/or receive data, including one or more of position data (or in other words positioning data), information identifying the vehicle, and information about the status of the vehicle. Information about the status of the vehicle can for instance include one or more of tire pressure data, tire temperature data, ambient temperature, vehicle speed, driving times, information of an onboard diagnosis (OBD) system, and other information.

Optionally, the telematics system of the first vehicle provides a unique identifier of the first vehicle, and/or the telematics system of the second vehicle provides a unique identifier of the second vehicle. For instance, a unique identifier of a vehicle may comprise one or more of a telematics system identification number, a vehicle identification number, an individual vehicle name (such as "Marco's tractor", and/or a call sign), and a license plate number. When reference is made to numbers herein, such numbers may also comprise letters and/or signs.

In still another embodiment, the first vehicle is one of a tractor and a trailer, and the second vehicle is a trailer. In particular, the method may typically be used for detecting and/or tracking tractor-trailer linkage. However, in addition or alternatively, the method may also be used to detect a linkage between two trailers. For instance, in some applications, a truck or tractor may pull multiple trailers at the same time and/or behind one another.

In still another embodiment, at least one of said matching, comparing, and determining is carried out by one or more of a remote server and a cloud service. Thus, in such an embodiment, said steps are carried out remotely and not by one or more of the vehicles. However, in another option, it is possible that such steps are carried out in a vehicle, such as by an onboard computer of a tractor.

According to the second aspect, the invention is directed to a method of detecting a linkage between vehicles (such as between a tractor and a trailer, or a first trailer and a second trailer), comprising steps of monitoring a location of a first vehicle with a global navigation satellite system (preferably, with GPS) so as to obtain a first vehicle trace based on positioning data (preferably, global positioning data of the GPS) obtained via the global navigation satellite system, and monitoring a location of a second vehicle with a global navigation satellite system (preferably, with GPS) so as to obtain a second vehicle trace based on global positioning data (preferably, global positioning data of the GPS) obtained via the global navigation satellite system. Furthermore, and still in accordance with the second aspect, the method comprises comparing the first vehicle trace with the second vehicle trace for a common time period, and determining a degree of conformity between the first vehicle trace and the second vehicle trace for the common time period.

Thus, the method according the second aspect allows the detection of linkage between two vehicles based, or in other words, directly based on vehicle traces obtained via the respective satellite navigation system. Matching of such traces to a map or road map (also sometimes referred to as map-matching) is not required or carried out to determine the degree of conformity between both traces. Hence, such a method does not require computational time for map-matching. However, the above-mentioned first aspect may, e.g., have other advantages, such as providing good linkage detection results with relatively low sampling rates of monitoring the locations of the vehicles, whereas the present method according to the second aspect may typically require higher sampling rates. Moreover, typically, less monitoring data may be transferred in relation to the first aspect.

In one embodiment of the second aspect, the first vehicle trace and the second vehicle trace are compared based on said positioning data, in the absence of matching the first vehicle trace and the second vehicle trace to a road map.

In another embodiment, each vehicle trace of the first vehicle trace and the second vehicle trace is interpolated so as to obtain a first interpolated vehicle trace and a second interpolated vehicle trace.

In still another embodiment, an interpolated vehicle trace is based on one or more of a linear interpolation, a polynomial interpolation, and a spline interpolation.

In still another embodiment, said step of comparing comprises comparing a graphic representation of one or more of a) the first vehicle trace and the second vehicle trace, and b) the first interpolated vehicle trace and the second interpolated vehicle trace, to determine the degree of conformity. Graphic representations, such as of one or more of vehicle traces, interpolated vehicle traces, map routes, and interpolated map routes, may, e.g., be compared by one or more of histogram-based methods, methods based on structural similarity index, feature-based methods, and other suitable methods known in the art.

According to the third aspect, the invention is directed to a method of monitoring, or detecting, tractor-trailer linkages in a vehicle fleet comprising tractors and trailers, wherein the method comprises a step of providing a vehicle fleet comprising tractors and trailers, wherein each tractor of the tractors comprises a telematics system for uniquely identifying the tractor and determining a location of the tractor, and wherein each trailer of the trailers comprises a telematics system for uniquely identifying the trailer and determining a location of the trailer. Furthermore, the method comprises the steps of monitoring the locations of at least a plurality of the tractors via (their) respective telematics systems so as to obtain a plurality of tractor traces, and monitoring the locations of at least a plurality of the trailers via (their) respective telematics systems so as to obtain a plurality of trailer traces. Further steps comprise matching tractor traces of the plurality of tractor traces and trailer traces of the plurality of trailer traces to map routes so as to obtain matched tractor map routes and matched trailer map routes, and comparing the matched tractor map routes with the matched trailer map routes for a common time period, including determining a degree of conformity between the matched tractor map routes and the matched trailer map routes for the common time period so as to obtain one or more conforming pairs of matched tractor map routes and matched trailer map routes, indicative of one or more tractor-trailer linkages, or in other words, of a respective tractor trailer linkage.

Thus, such a method of monitoring (and/or detecting) tractor-trailer linkages helps to indicate tractor-trailer linkages based, on the one hand, on individual vehicle (tractor or trailer) traces which are obtained via individual telematics systems (e.g., using a global navigation satellite system, and/or comprising monitoring said locations with a global navigation satellite system), and, on the other hand, map-matching of such individual traces to respective and/or individual map routes. A comparison of said matched map routes with one another results in one or more conforming pairs of matched map routes, indicating one or more pairs of linked (or in other words hitched or mechanically linked) tractors and trailers. As trailers are typically not driven or powered by a motor, at least one linkage between a tractor and a trailer is detected when monitoring a respective vehicle fleet comprising at least one moving and/or driving tractor and at least one driving and/or moving trailer. Said method provides an advantage of allowing an efficient and/or automated detection of linkages of tractors and trailers in the vehicle fleet. This is of particular advantage in relatively large vehicle fleets, such as fleets comprising hundreds or even thousands of vehicles. A manual bookkeeping of tractor-trailer linkages is not required with the help of the invention. Potential calls with tractor drivers to check linkages between certain tractors and trailers are not required.

In one embodiment, the method comprises the step of providing one or more pairs of unique identifiers, wherein each unique identifier of the one or more pairs of unique identifiers corresponds to one of the tractors and the trailers corresponding to one of the matched tractor map routes and the matched trailer map routes of the conforming pairs of matched tractor map routes and matched trailer map routes. In other words, it is known which vehicles belong or correspond to the matched map routes so that for each pair of matched map routes, the corresponding vehicles are known and/or tracked. Furthermore, for each vehicle and/or its telematics system a unique identifier is known and/or provided. Hence, pairs of unique (vehicle) identifiers correspond to and/or may be assigned to the pairs of matched map routes.

In another embodiment, the method comprises the step of providing a data set comprising unique identifiers of each tractor and each trailer of the vehicle fleet. For instance, such a data set comprises one or more of a list (e.g., a digital list), and a database comprising the unique identifiers of the tractors and the trailers of the vehicle fleet. Such a data set may typically be available to a fleet manager, providing an overview of the vehicles of the vehicle fleet. Optionally, the data set may be searchable and/or displayed, such as via one or more of a computer, and a mobile device, e.g., including one or more of a laptop, tablet, and cell phone.

In still another embodiment, the method further comprises the step of assigning for each pair of unique identifiers, comprising a first unique identifier and a second unique identifier, i) the first unique identifier of the pair of unique identifiers to a unique identifier of the data set corresponding to (e.g., equal to) the second unique identifier of the pair of unique identifiers, and/or ii) the second unique identifier of the pair of unique identifiers to a unique identifier of the data set corresponding to (e.g., equal to) the first unique identifier of the pair of unique identifiers. Such an assigning step improves the data set by adding information about the linkage status of vehicles, particularly by assigning unique identifiers of linked tractors and trailers to each other. For instance, if a trailer has been detected to be linked to a tractor, such a trailer (particularly its unique identifier), present in the data set, can be provided or associated with an attribute indicating the tractor to which the trailer is linked. Preferably, the tractor, comprised in the data set, can also be provided or associated with an attribute indicating the trailer linked to the tractor. Optionally, multiple trailers may be linked to one tractor so that such configurations and/or linkages may be identified in the data set as well.

In still another embodiment, a unique identifier of said unique identifiers comprises one or more of a telematics system identification number, a vehicle identification number, an individual vehicle name, and a license plate number, such as mentioned already herein above.

In still another embodiment, at least for a majority of the tractors and the trailers, location information (such as comprising one or more of a global position, a GPS position, a street address, a road segment, and a road name and/or number) is assigned to each of the unique identifiers of the data set, based on location information obtained via respective telematics systems of the tractors and the trailers. Thus, the data set can provide information on the linkage status of tractors and trailers as well as about their positions.

In still another embodiment, the method further comprises forming sets of traces comprising tractor traces and trailer traces, which are within a defined maximum spatial distance and/or within a defined maximum time difference. Preferably, said step of matching tractor traces (of the plurality of tractor traces) and trailer traces (of the plurality of trailer traces) to map routes, comprises matching each tractor trace and each trailer trace of each set of traces of the sets of traces to a map route so as to obtain for each set of traces a set of map routes comprising the matched tractor map routes and the matched trailer map routes. Such sets of traces, or sets of map routes respectively, comprise a smaller number of traces and/or map routes, than all traces and/or map routes which could be provided. In particular, forming such sets helps to reduce the amount of data to be one or more of transmitted, managed, and used, e.g., for said later comparing step. In other words, such sets help to make a preselection which reduces one or more of data transmission, required computational capacities, and costs to carry out one or more of the following method steps.

In still another embodiment, the vehicle fleet is one or more of a vehicle fleet comprising from 50 to 10000 tractors and from 50 to 10000 trailers, and a truck fleet comprising at least predominantly tractors including one or more of a) at least six 22.5 inch wheels and trailers including at least four 22.5 inch wheels. In another embodiment, said wheels (typically comprising rims and pneumatic tires) may include one or more of 17.5, 19.5, 22.5, and 24.5 inch tires.

In still another embodiment, the tractors, trailers, and/or vehicles comprise wheels, wherein each of said wheels comprises a rim and a tire, and wherein at least a majority of the wheels comprises a tire monitoring device mounted to the rim and/or the tire. Preferably, the tire monitoring device comprises a tire (inflation) pressure sensor and optionally a wireless transceiver and/or transmitter, which is adapted to submit tire pressure information based on measurements of the tire pressure sensor. Optionally, such tire pressure information is at least transmitted to the telematics system of the respective trailer, tractor, or vehicle to which the wheel is mounted. In still another option, the telematics system sends or provides such information to the data set. In still another option, tire pressure information is provided and/or assigned to each unique identifier and/or vehicle in the data set. Thus, a vehicle fleet manager can be provided with tire pressure related information and/or such information is associated with each vehicle of the fleet, optionally together with its location and also a linkage status.

In still another embodiment, each telematics system wirelessly communicates one or more of monitored locations, and the traces to one or more of a remote server (or, in other words, a server), a cloud service, a computer, a mobile device, and a fleet manager of the vehicle fleet. For instance, one or more of said remote server, cloud service, computer, mobile device may comprise said data set. Wireless communication is, e.g., optionally carried out by one or more of radiofrequency (RF) transmission, wireless local area network (WLAN), and mobile network. Thus, steps of matching and/or comparing may be carried out remotely. In an alternative embodiment, it is possible that further method steps, such as said matching, comparing and determining are carried out in at least one of the vehicles.

In still another embodiment, at least one of said matching, comparing, and determining is carried out by one or more of a remote server and a cloud service.

In still another embodiment, the location comprises or consists of a GPS position.

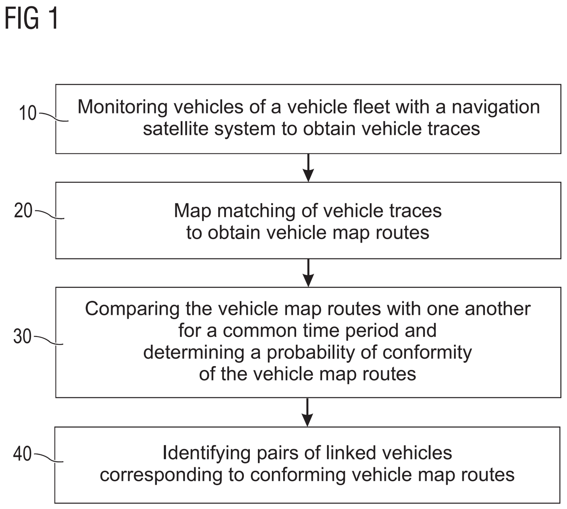

Figure 1 shows a flowchart of another embodiment of the present invention, wherein a first method step 10 comprises monitoring vehicles of a vehicle fleet with a navigation satellite system to obtain vehicle traces. Preferably, at least a majority of the vehicles of the vehicle fleet is monitored with the navigation satellite system, such as GPS, preferably via a telematics system of each vehicle. In a further step 20, the method comprises map matching of vehicle traces to obtain vehicle map routes. In this context it is not mandatory that each vehicle trace is map matched. In particular, in an option, only a set, or in other words a subset of vehicle traces is map matched. For instance, for vehicles located in different countries or having a larger distance between their locations than a defined maximum distance, map matching can be omitted. However, this shall not be understood as omitting step 20 for all vehicles but rather for a portion of the vehicles for which vehicle traces were obtained. Further method step 30 comprises comparing the vehicle map routes with one another for a common time period and determining a probability of conformity of the vehicle map routes, particularly to obtain conforming pairs of vehicle map routes. It is possible to define, such as depending on available data transfer bandwidths and/or computational capacities, how accurate said determination shall be carried out. In a further step 40, based on the afore-mentioned determination, pairs of linked vehicles are identified, corresponding to conforming vehicle map routes. Thus, as soon as said probability of conformity provides conforming vehicle map routes (typically two conforming map routes as in most cases one tractor has one trailer), such resulting pairs of conforming vehicle map routes can be used to provide and/or identify the corresponding pairs of vehicles. Such vehicles can typically be identified by a unique identifier as mentioned herein above.

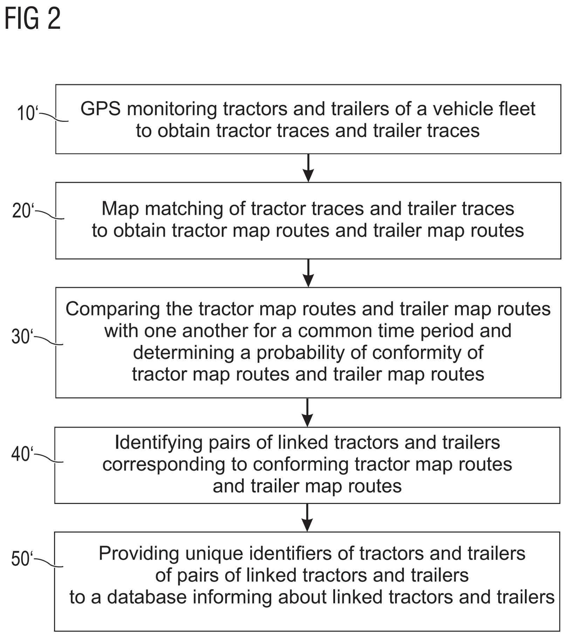

Figure 2 shows a flowchart of still another embodiment of the present invention, comprising a first step 10' of GPS monitoring tractors and trailers of a vehicle fleet (such as a truck fleet) to obtain tractor traces and trailer traces. In particular, GPS monitoring or tracking is a preferred reliable way to (individually) monitor the location of a plurality of vehicles. A second step 20' comprises map matching of tractor traces and trailer traces to obtain tactor map routes and trailer map routes. According to step 30', the method comprises comparing the tractor map routes and trailer map routes with one another for a common time period and determining a probability of conformity of tractor map routes and trailer map routes, particularly to obtain pairs of conforming tractor map routes and trailer map routes. In accordance with step 40', pairs of linked tractors and trailers are identified, which correspond to conforming tractor map routes and trailer map routes. Another step 50' comprises providing (or transferring) unique identifiers of tractors and trailers, of pairs of linked tractors and trailers, to a database informing about linked tractors and trailers. Such unique identifiers were typically assigned to each vehicle earlier, such as by an earlier allocation of a license plate, call name, or an identification number of a telematics system of the respective vehicle. Typically, the database allows retrieving and/or displaying information about the linked tractors and trailers. GPS monitoring and/or providing unique identifiers can typically be carried out via a telematics system of each respective tractor and trailer.

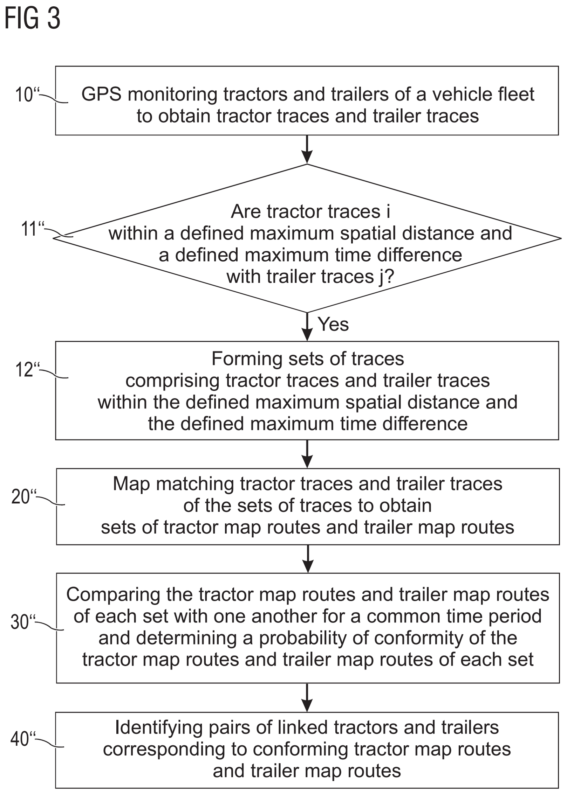

Figure 3 shows another flow chart in accordance with still another embodiment of the present invention, comprising a first step 10" of GPS monitoring or tracking tractors and trailers of a vehicle fleet to obtain tractor traces and trailer traces. Such traces are also sometimes referred to as GPS traces. In another step 11", it is checked whether tractor traces i (with i being an integer larger than 0) are within a defined maximum spatial distance and within a defined maximum time difference with trailer traces j (with j being an integer larger than 0). For instance, if two traces are in different countries or only in the same place with a time difference of some hours, such traces do not need to be further considered for detecting linkage of the tractors and trailers. Thus, if the check of step 11" returns a positive result (indicated with "Yes" in Figure 3), step 12" is carried out. If the check of step 11" returns a negative result ("No", not explicitly shown in Figure 3), then no further steps are carried out for such a respective combination of a tractor trace i with a trailer trace j in the present embodiment. In particular, step 12" is not carried out for such a combination of traces i,j which are not within the defined maximum spatial distance and the defined maximum time difference, or in other words, time interval, or time span. Step 12" comprises forming sets of traces comprising tractor traces and trailer traces within the defined maximum spatial distance and the defined maximum time difference. It is noted that such a set may also comprise only two traces, such as one tractor trace and one trailer trace. However, in an example, it is also possible that such a set comprises from 4 to 10 traces, or even more traces, depending on the defined maximum time difference and defined maximum spatial distance, and of course depending on the actual trajectories of the tractors and trailers. For instance, it is possible that dozens of tractors and trailers operate relatively close to each other, such as at a large transfer site or close to a vehicle fleet base. A further step 20" comprises map matching tractor traces and trailer traces of the sets of traces to obtain sets of tractor map routes and sets of trailer map routes (respectively corresponding to said sets of traces comprising the tractor traces and trailer traces). A comparison step 30" comprises comparing the tractor map routes and trailer map routes of each set with one another for a common time period and determining a probability of conformity of the tractor map routes and the trailer map routes of each set, or in other words per set. Step 40" comprises identifying pairs of linked tractors and trailers corresponding to conforming tractor map routes and trailer map routes, i.e., in the same or a similar manner as already described herein above in relation to other embodiments.

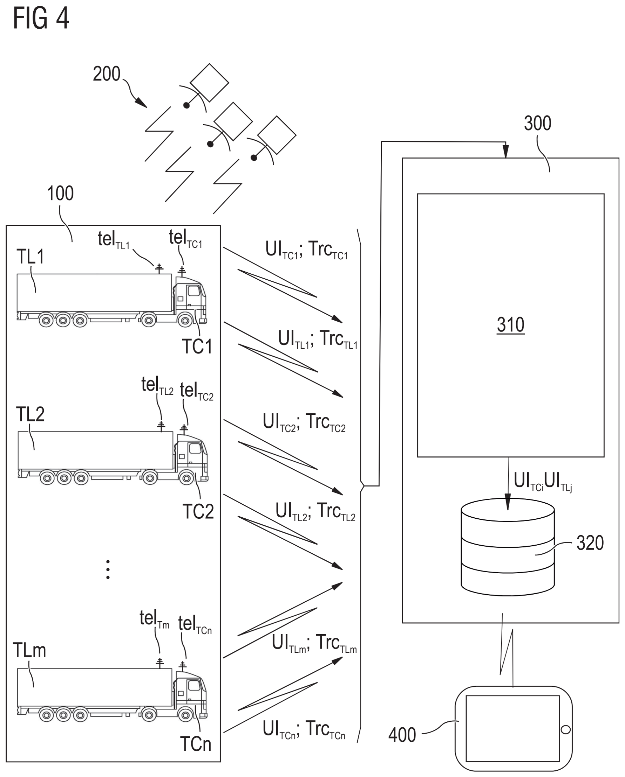

Figure 4 shows a scheme including a vehicle fleet 100 (in particular, a truck fleet), a global navigation satellite system 200, at least one remote server 300 (such as of a cloud service), and a mobile device 400 (such as a tablet, laptop or cell phone, e.g., of a fleet manager). While a mobile device 400 is depicted in the embodiment of Figure 4, a desktop computer in combination with a screen, or other suitable electronic devices, are of course also possible in other embodiments which are also within the scope of the present invention. Vehicle fleet 100 comprises a plurality of tractors TC1, TC2, TCn, and a plurality of trailers TL1, TL2, TLm. In other words, the fleet has i tractors, with i = 1, ... , n, as well as j trailers, with j = 1, ... , m; wherein i and j are integers, and each of n and m is preferably at most 10000. In schematic Figure 4, said tractors and trailers are shown as (mechanically) linked. This corresponds also to a typical configuration when tractors and trailers are transporting goods and/or traveling. Each tractor TC1, TC2, TCn and each trailer TL1, TL2, TLm has its own telematics system tel_{TC1}, tel_{TC2}, tel_{TCn}; tel_{TL1}, tel_{TL2}, tel_{TLm}. Such telematics systems tel_{TC1}, tel_{TC2}, tel_{TCn}; tel_{TL1}, tel_{TL2}, tel_{TLm} are schematically indicated with an antenna symbol. However, typically such telematics systems comprise more components than an antenna, such as one or more of a processing system, one or more sensors, one or more receivers, one or more transmitters, one or more transceivers, one or more driving assistance systems, one or more vehicle status information systems, a cell phone system, a navigation system (such based on GPS), one or more warning systems, and one or more wireless communications systems. Each of the telematics systems tel_{TC1}, tel_{TC2}, tel_{TCn}; tel_{TL1}, tel_{TL2}, tel_{TLm} is configured and/or adapted to provide, particularly wirelessly transmit, preferably via cellular communication and/or data transmission, a unique identifier UI_{TC1}, UI_{TC2}, UI_{TCn}; UI_{TL1}, UI_{TL2}, UI_{TLm} individually identifying the respective tractor TC1, TC2, TCn or trailer TL1, TL2, TLm. A unique identifier UI_{TC1}, UI_{TC2}, UI_{TCn}; UI_{TL1}, UI_{TL2}, UI_{TLm} can be of a type as already mentioned herein above. Moreover, each telematics system tel_{TC1}, tel_{TC2}, tel_{TCn}; tel_{TL1}, tel_{TL2}, tel_{TLm} provides, particularly wirelessly transmits, a trace Trc_{TC1}, Trc_{TC2}, Trc_{TCn}; Trc_{TL1}, Trc_{TL2}, Trc_{TLm} of the monitored and/or tracked positions or locations of the respective vehicle TC1, TC2, TCn; TL1, TL2, TLm. Said unique identifiers UI_{TC1}, UI_{TC2}, UI_{TCn}; UI_{TL1}, UI_{TL2}, UI_{TLm} and traces Trc_{TC1}, Trc_{TC2}, Trc_{TCn}; Trc_{TL1}, Trc_{TL2}, Trc_{TLm} are wirelessly transmitted to and/or received by a remote server 300, such as of a cloud service provider, which comprises a processing system 310 and a database 320. Optionally, the database could also be part of a different service, server, or electronic device in another embodiment. Thus, the tractor and trailer traces Trc_{TC1}, Trc_{TC2}, Trc_{TCn}; Trc_{TL1}, Trc_{TL2}, Trc_{TLm} as well as the unique identifiers UI_{TC1}, UI_{TC2}, UI_{TCn}; UI_{TL1}, UI_{TL2}, UI_{TLm} are made available to the server 300 wherein its processing system 310 is configured and/or adapted to carry out method steps as described in one or more further embodiments mentioned herein above. Such steps (which are not explicitly shown in Figure 4) may, e.g., comprise one or more of a) map matching of the tractor and trailer traces Trc_{TC1}, Trc_{TC2}, Trc_{TCn}; Trc_{TL1}, Trc_{TL2}, Trc_{TLm} to corresponding map routes, b) comparing such map routes and determining conforming map routes of tractors and trailers, and c) identifying conforming pairs of unique identifiers UI_{TCi}UI_{TLj}. In the present and non-limiting embodiment, conforming pairs of unique identifiers UI_{TCi}UI_{TLj} are provided to the database 320 (or a data set). The database 320 allows retrieving information about which of the tractors TC1, TC2, TCn are linked to which of the trailers TL1, TL2, TLm. In the present embodiment, such linkage status information is wirelessly accessible by the mobile device 400 which can display the linkage status to a user, such as to a vehicle fleet manager.

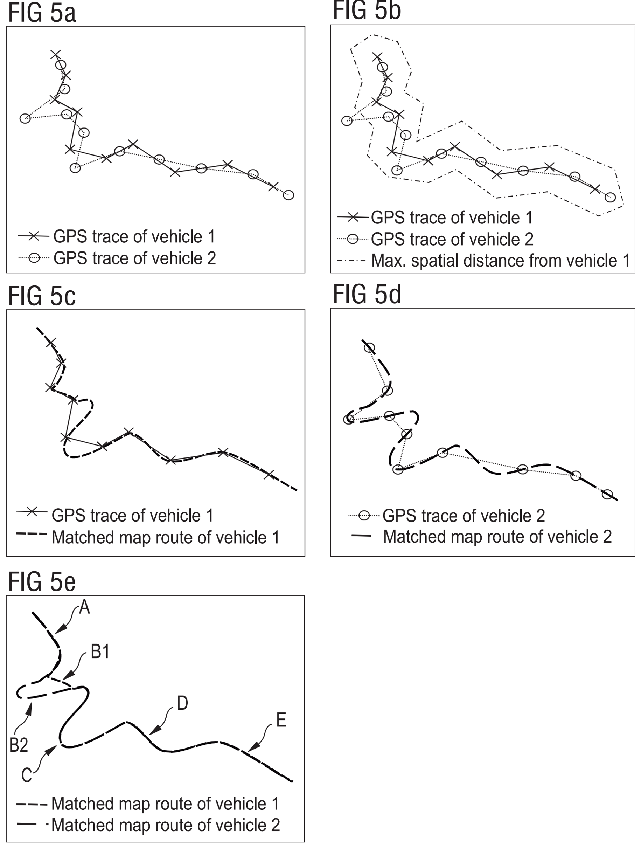

Figures 5a, 5b, 5c, 5d, and 5e schematically illustrate some preferred method steps in accordance with an embodiment of the present invention. Figure 5a schematically shows two GPS traces. A first GPS trace corresponds to vehicle 1 (or a first vehicle) and a second GPS trace corresponds to vehicle 2 (or a second vehicle). As visible in Figure 5a, both GPS traces are not identical. In particular, the GPS positions of each trace, which are indicated by crosses for vehicle 1 and by circles for vehicle 2 are at different positions. For instance, telematics systems of different vehicles are typically not synchronized in time so that they may provide GPS positions/locations at different times, which typically results in different traces, even if the two vehicles have the same trajectory at the same time. In the present example, the GPS positions of both vehicles are connected by straight lines resulting in the depicted traces. In the present embodiment according to Figure 5b, a spatial interval, or in other words a maximum spatial distance, is provided around the GPS trace of vehicle 1 (sometimes also referred to as a geofence area). This provision helps to check whether the GPS trace of vehicle 2 is close enough to that of vehicle 1 to be potentially linked to vehicle 1. The size of the maximum spatial distance can be defined, such as depending on a desired accuracy, and/or available computational capacities for later steps. In the present example, it is found that the GPS trace of vehicle 2 is at least partially within the maximum spatial distance of vehicle 1 so that further steps are carried out, which particularly includes map matching of the vehicle traces of vehicles 1 and 2. Furthermore, preferably, it is also checked if both traces have been monitored within a maximum time difference. For instance, if both traces were monitored on different days, and not on the same day, further steps are not carried out as both vehicles 1 and 2 are considered as being unable to be linked to each other. The maximum allowed time difference can again be defined depending on available resources and/or desired accuracy. In an option, it is possible that map data, or in other words, routes are only provided or loaded for the area of maximum spatial distance. As shown in Figure 5c, the GPS trace of vehicle 1 is map matched to a map route (here a road), resulting in a map route (here a map road) of vehicle 1, which is shown by a dashed line. Similarly, as shown in Figure 5d, the GPS trace of vehicle 2 is also map matched, resulting in a map route (or road) of vehicle 2, as indicated by the dashed line in Figure 5d. In a further step, as indicated in Figure 5e, both matched map routes of vehicle 1 and vehicle 2 are compared with each other. In the present embodiment, visualizations of both map routes are graphically superposed. For the sake of better comprehensibility, road segments of both routes are schematically indicated by A, B1, B2, C, D, and E, wherein it can be observed that road segments A, C, D, and E of the map routes of vehicles 1 and 2 essentially overlap, and/or are identical. However, matched road segments B1 (corresponding to vehicle 1) and B2 (corresponding to vehicle 2) do not overlap, or in other words are not identical and are different. Overall, when comparing shared lengths of the matched map routes of vehicle 1 and vehicle 2, despite the difference in segments B1 and B2, according to this schematic embodiment, more than 85% of both map routes conform to each other, such as based on shared road kilometers along the route. In other words, a degree of conformity can be given herein as a ratio of shared route length / kilometers and total route length. It is assumed herein that both traces corresponding to both matched map routes were monitored within said defined maximum time difference. Furthermore, in the present example, it is assumed that more than 75% of shared map route length / kilometers of the total map route length / kilometers (as an exemplary threshold) are considered to result in a conformity of map routes of both vehicles. Thus, it is finally concluded herein that vehicles 1 and 2 are linked to each other.

Instead of considering shared road lengths, it is, e.g., possible to consider other metrics to decide whether both map routes are conforming map routes. In a similar embodiment, a percentage of conforming, or in other words identical, road segments may be chosen as a degree of conformity. With respect to the map routes shown in Figure 5e, road segments A, C, D, and E are identical for both map routes, whereas segments B1, B2 are different. Thus, out of 5 map road segments, 4 map road segments are equal, resulting in a ratio of 4/5 = 0.8, corresponding to 80% conforming road segments for the map routes of vehicle 1 and vehicle 2. A chosen threshold value may, e.g., require at least 75% identical road segments, such that a linkage between vehicle 1 and vehicle 2 is determined. The above percentages can also be considered as percentages of probability of conformity between both matched map routes. As mentioned herein above, a variety of metrics can be chosen for determining a degree of conformity of map routes, such as based on desired accuracy. The present invention, or one or more of its aspects or embodiments shall not be understood as being limited only to a specific embodiment or method of determining a degree of conformity.

While the embodiment of Figures 5a to 5e refers to two vehicles, more vehicle traces may be monitored and matched to map routes accordingly, such as for vehicle fleets (e.g., truck fleets comprising at least hundreds of tractors and trailers). Furthermore, it is emphasized that the depicted graphical superposition of routes is not necessary in other embodiments. For instance, both routes, or one or more segments thereof, could be compared without any visualization and/or compared sequentially.

It is emphasized that embodiments and/or features of one or more of the abovementioned aspects may also be embodiments and/or features of another one of the abovementioned aspects. Moreover, multiple embodiments or features mentioned herein may be combined with one another. Furthermore, it is emphasized that methods mentioned herein may optionally comprise further previous steps, intermediate steps, or subsequent steps not explicitly mentioned, unless indicated otherwise herein.

## Claims

1. A method for detecting a linkage between vehicles, the method comprising the steps of:
monitoring a location of a first vehicle so as to obtain a first vehicle trace;
optionally matching the first vehicle trace to a map route to obtain a first vehicle map route;
monitoring a location of a second vehicle so as to obtain a second vehicle trace;
optionally matching the second vehicle trace to a map route to obtain a second vehicle map route; and
comparing the first vehicle trace or map route with the second vehicle trace or map route for a common time period, including determining a degree of conformity between the first vehicle map route and the second vehicle map route for the common time period.

2. The method of claim 1 wherein the method comprises:
monitoring the location of the first vehicle via a global navigation satellite system (200) so as to obtain the first vehicle trace based on positioning data obtained via the global navigation satellite system (200);
monitoring the location of the second vehicle via a global navigation satellite system (200) so as to obtain the second vehicle trace based on positioning data obtained via the global navigation satellite system (200); and
comparing the first vehicle trace with the second vehicle trace for a common time period, including determining a degree of conformity between the first vehicle trace and the second vehicle trace for the common time period.

3. The method according to claim 1, wherein the step of comparing the first vehicle map route with the second vehicle map route comprises one or more of: comparing map route segments of the first vehicle map route with map route segments of the second vehicle map route; comparing shared route lengths of the first vehicle map route and the second vehicle map route; comparing a visual image of the first vehicle map route with a visual image of the second vehicle map route; and comparing a fitting function of the first vehicle map route with a fitting function of the second vehicle map route.

4. The method according to at least one of the previous claims, further comprising a step of:
determining a linkage between the first vehicle and the second vehicle if the degree of conformity between the first vehicle map route and the second vehicle map route exceeds a defined threshold value.

5. The method according to at least one of the previous claims, wherein at least one of monitoring the location of first vehicle and monitoring the location of the second vehicle includes monitoring the location with a global navigation satellite system (200).

6. The method according to at least one of the previous claims, wherein at least one of monitoring the location of the first vehicle and monitoring the location of the second vehicle is carried out over a monitoring period, which is at least 30 minutes; and/or wherein the common time period is at least 30 minutes.

7. The method according to at least one of the previous claims, wherein at least one of matching the first vehicle trace to a map route and matching the second vehicle trace to a map route includes using one or more of: a map matching algorithm, and a road map.

8. The method according to at least one of the previous claims, wherein the method further comprises:
checking if at least one of i) the first vehicle trace and the second vehicle trace, and ii) the location of the first vehicle and the location of the second vehicle are within a defined maximum spatial distance; and
if the at least one of i) the first vehicle trace and the second vehicle trace, and ii) the location of the first vehicle and the location of the second vehicle, are within the defined maximum spatial distance, checking if the at least one of i) the first vehicle trace and the second vehicle trace, and ii) the location of the first vehicle and the location of the second vehicle, which are within the defined maximum spatial distance, are within a defined maximum time difference.

9. The method according to at least one of the previous claims, wherein:
(i) each of the first vehicle and the second vehicle comprises a telematics system, and wherein the telematics system of the first vehicle provides a unique identifier of the first vehicle, and the telematics system of the second vehicle provides a unique identifier of the second vehicle; and/or
(ii) at least one of the matching, comparing, and determining is carried out by one or more of a remote server (300) and a cloud service.

10. The method according to at least one of the previous claims, wherein the first vehicle is one of a tractor and a trailer, and the second vehicle is a trailer.

11. The method according to at least one of the previous claims, wherein the first vehicle trace and the second vehicle trace are compared based on the positioning data, in the absence of matching the first vehicle trace and the second vehicle trace to a road map.

12. A method of monitoring tractor-trailer linkages in a vehicle fleet (100), the method comprising the steps of:
providing a vehicle fleet (100) comprising tractors and trailers, wherein each tractor of the tractors comprises a telematics system for uniquely identifying the tractor and determining a location of the tractor, and wherein each trailer of the trailers comprises a telematics system for uniquely identifying the trailer and determining a location of the trailer;
monitoring locations of at least a plurality of the tractors via respective telematics systems so as to obtain a plurality of tractor traces;
monitoring locations of at least a plurality of the trailers via respective telematics systems so as to obtain a plurality of trailer traces;
matching tractor traces of the plurality of tractor traces and trailer traces of the plurality of trailer traces to map routes so as to obtain matched tractor map routes and matched trailer map routes; and
comparing the matched tractor map routes with the matched trailer map routes for a common time period, including determining a degree of conformity between the matched tractor map routes and the matched trailer map routes for the common time period so as to obtain one or more conforming pairs of matched tractor map routes and matched trailer map routes, indicative of one or more tractor-trailer linkages.

13. The method according to claim 12, further comprising the step of:
(i) providing one or more pairs of unique identifiers, wherein each unique identifier of the one or more pairs of unique identifiers corresponds to one of the tractors and the trailers corresponding to one of the matched tractor map routes and the matched trailer map routes of the conforming pairs of matched tractor map routes and matched trailer map routes; and/or
(ii) providing a data set comprising unique identifiers of each tractor and each trailer of the vehicle fleet; and assigning, for each pair of unique identifiers comprising a first unique identifier and a second unique identifier, (a) the first unique identifier of the pair of unique identifiers to a unique identifier of the data set corresponding to the second unique identifier of the pair of unique identifiers, and (b) the second unique identifier of the pair of unique identifiers to a unique identifier of the data set corresponding to the first unique identifier of the pair of unique identifiers.

14. The method according to claim 12 or 13, wherein a unique identifier of the unique identifiers comprises one or more of a telematics system identification number, a vehicle identification number, an individual vehicle name, and a license plate number.

15. The method according to at least one of the claims 12 to 14, wherein at least for a majority of the tractors and the trailers, location information is assigned to each of the unique identifiers of the data set, based on location information obtained via respective telematics systems of the tractors and the trailers.
